Europäisches Patentamt

European Patent Office

Office européen des brevets

(11) Veröffentlichungsnummer: **0 077 456**
**B1**

(12) **EUROPÄISCHE PATENTSCHRIFT**

(45) Veröffentlichungstag der Patentschrift:
11.06.86

(21) Anmeldenummer: 82107836.7

(22) Anmeldetag: 26.08.82

(51) Int. Cl.⁴: **B 23 Q 11/08, F 16 P 3/02**

(54) Abdeckung für das Maschinenbett von Werkzeugmaschinen.

(30) Priorität: 20.10.81 DE 8130521 U

(43) Veröffentlichungstag der Anmeldung:
27.04.83 Patentblatt 83/17

(45) Bekanntmachung des Hinweises auf die Patenterteilung:
11.06.86 Patentblatt 86/24

(84) Benannte Vertragsstaaten:
DE FR GB IT

(56) Entgegenhaltungen:
DD - A - 135 462
DE - A - 2 701 698
DE - A - 3 024 011
DE - U - 7 738 190
GB - A - 1 073 939
US - A - 3 366 012

(73) Patentinhaber: Cremer, Heinrich, Einruhrstrasse 94,
D-4050 Mönchengladbach 2 (DE)

(72) Erfinder: Cremer, Heinrich, Einruhrstrasse 94,
D-4050 Mönchengladbach 2 (DE)

(74) Vertreter: Wangemann, Horst, Dipl.-Ing.,
Stresemannstrasse 28, D-4000 Düsseldorf (DE)

**Beschreibung**

Die Erfindung bezieht sich auf eine Abdeckung für das Maschinenbett von Werkzeugmaschinen der im Oberbegriff des Hauptanspruches genannten Art.

Abdeckungen für das Maschinenbett von Werkzeugmaschinen sind aus der DE-A- 1.602.868 und dem DE-U- 79 25 807 bekannt. Bei ihnen bedarf es neben dem Maschinenbett eines bestimmten Raumes, um dort die Seitenteile der teleskopartig ineinanderschiebbaren Kästen zu führen. Das Wasser, insbesondere aber die Späne, die auf die Oberseite der Abdeckkästen fallen, gelangen über die Seitenkante der Abdeckkästen hinaus in eine stationäre, seitliche Rinne am Maschinenbett, wo es häufig zu einem Spänestau kommt.

Durch die den Gattungsbegriff des Hauptanspruches bestimmende DE-U-7 738 190 ist eine Abdeckung bekannt, bei der der Zwischenraum zwischen den nach oben gerichteten Seitenwänden der Kästen, die vergleichsweise die Schenkel des U-Querschnitts bilden, durch je einen maschinenseitigen Abschnitt oder Führungsleiste übergriffen werden, so daß kein Wasser und keine Späne in den genannten Zwischenraum gelangen können. Häufig steht aber der Raum für derartige maschinenseitigen, übergreifenden Abschnitte oder Führungsleisten nicht zur Verfügung. Durch die GB-A-1 073 939 ist ferner eine Teleskopabdeckung bekannt, deren teleskopartig ineinanderschiebbaren, U-förmigen Kästen nach unten offen sind. Die Seitenwände weisen hierbei gegeneinander gerichtete Flansche oder Leisten auf, die einerseits zur Versteifung der Seitenwände und damit des gesamten Kastens über seine Länge dienen, andererseits seitliche Führungsleisten am Maschinenbett untergreifen, um ein Aufwölben der gesamten Abdeckung zu vermeiden.

Der Erfindung liegt die Aufgabe zugrunde, die Teleskopabdeckung nach dem Oberbegriff des Hauptanspruches dahingehend zu verbessern, daß eine platzsparende Abdeckung geschaffen wird, bei der nicht nur ein vollständiges Abdecken des Maschinenbetts gewährleistet wird, vielmehr auch ein Schutz der Zwischenräume zwischen den Kästen und ein Freihalten des Maschinenbetts von Spänen und Wasser, wobei ein gezieltes und störungsfreies Abführen der Späne und des Wassers ermöglicht wird. Die hierbei zur Anwendung gelangenden Mittel sollen leicht überschaubar und gegebenenfalls leicht zu reinigen sein. Die Abdeckung soll ferner ohne maschinenseitige Führungsleisten gegen ein Auslenken nach oben beim Zusammenschieben der Kästen gesichert sein.

Zur Lösung dieser Aufgabe sieht die Erfindung die Merkmale des kennzeichnenden Teils des Hauptanspruches vor. Die Merkmale der Unteransprüche dienen der Verbesserung und Weiterentwicklung der Merkmale des Hauptanspruches.

Der Vorteil der erfindungsgemäßen Teleskopabdeckung offenbart sich darin, daß die Späne und das Wasser, die auf die Oberseite der Abdeckkästen gelangen, auch dort in Längsrichtung der Abdeckung und am Kopfende und/oder am entgegengesetzten Ende der Kästen, aber auch der Gesamtabdeckung abgeführt werden. Es steht somit zur Abführung des Wassers und der Späne eine Fläche zur Verfügung, die der Breite der Abdeckung entspricht, wobei das angefallene Wasser und die Späne an dem einen oder anderen Ende der Abdeckung gezielt, z. B. in einen Späneförderer gelangen. - Desweiteren wird das Hineingelangen von Wasser und Spänen in die Zwischenräume zwischen die Kästen vermieden.

Auf der Zeichnung sind Ausführungsbeispiele der erfindungsgemäßen Teleskopabdeckung dargestellt und zwar zeigt

Fig. 1 die Seitenansicht einer Ausführungsform der Abdeckung bekannter Art ohne Seitenwände und

Fig. 2 einen Vertikalschnitt durch eine erfindungsgemäße Ausführungsform der Abdeckung bei zusammengeschobenen Abdeckkästen.

Die Teleskopabdeckung nach der Erfindung, die das Maschinenbett M über deren Länge und Breite abdecken soll, besteht aus mehreren Abdeckkästen 1, 2, 3, 4 usw. unterschiedlicher Größe derart, daß der Abdeckkasten 4 teleskopartig in den Abdeckkasten 3 und dieser wiederum in den Abdeckkasten 2 usw. einschiebbar und in entgegengesetzter Richtung wieder herausziehbar ist. Hierbei kann der kleinste innere Kasten 4 mit dem beweglichen Maschinenteil, der größte, äußere Abdeckkasten 1 mit dem feststehenden Maschinenteil am Maschinenbett M oder umgekehrt verbunden sein.

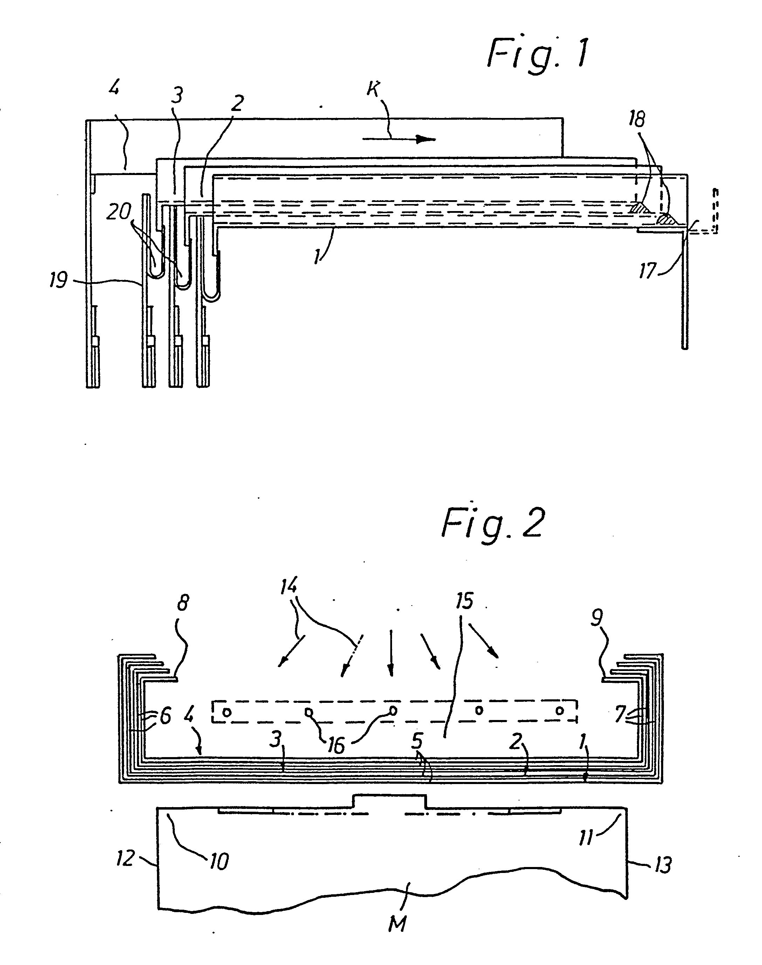

Jeder Abdeckkasten weist eine horizontale Wand 5 sowie zwei rechtwinklig daran anschließende, nach oben gerichtete Seitenwände 6, 7 auf. Bei der Ausführungsform nach Fig. 2 schließen sich an die Seitenwände 6, 7 im rechten Winkel und gegeneinander gerichtet, Flansche oder Streifen 8, 9 an, die sich wiederum über- bzw. untergreifen und ein Aufwölben der Abdeckung nach oben ausschließen. Die horizontalen Wände 5 der einzelnen Abdeckkästen liegen somit horizontal übereinander, die nach oben gerichteten Seitenwände 6 und 7 der Kästen sind senkrecht nebeneinander gelegen, während die Flansche oder Streifen 8 und 9 sich übergreifen und außer dem Aufwölben der Abdeckung beim Zusammenschieben der Kästen das Eindringen von Wasser und Spänen zwischen die Seitenwände 6, 7 verhindern. Die Abdeckung überdeckt auch mit ihrem kleinsten Kasten 4 die Seitenbereiche 10, 11 des Maschinenbettes M, beläßt gleichwohl neben den Seitenwänden 12, 13 platz für einen hohen Teil oder einen unmittelbar angrenzenden Teil der Werkzeugmaschine, wobei die gesamte Breite des Maschinenbettes M frei bleibt.

Das anfallende Wasser, insbesondere aber die Späne der Werkzeugmaschine fallen in Richtung der Pfeile 14 in von den Seitenwänden 6, 7 begrenzten Raum 15 oberhalb der horizontalen Kastenwände 5. Die hierzu zur Verfügung stehende Fläche ist gegenüber bekannten Ausführungsformen von, die Späne aufnehmenden Rinnen oder Flächen, in bzw. auf denen letztlich das Wasser oder die Späne gesammelt werden, verhältnismäßig groß, so daß es auf den Wänden 5 der Abdeckkästen zu keinem Wasser- oder Spanstau kommt.

Um das Abführen der Späne auf den Wänden 5 der Abdeckkästen 1 bis 4 usw. zu unterstützen, weist z.B. der Abdeckkasten 4 selbst oder der mit ihm verbundene bewegliche Maschinenteil eine Vorrichtung mit Basdüsen 16 auf, deren Luftstrom oder Wasserstrahl für ein Abführen der Späne in Richtung des pfeiles K in Fig. 1 sorgt. Vorzugsweise ist an dem Ende 17 des kleinsten Kastens, der mit dem feststehenden Maschinenteil verbunden ist, eine Querförderrinne 17 vorgesehen, in der mittels eines Querförderers die Späne abgeführt werden können.- Beim Zusammenfahren der Abdeckung werden die Späne durch die Abstreifleisten 18 der einzelnen Abdeckkästen in Zusammenschiebrichtung der Abdeckung in die Rinne 17 gefördert oder gelangen auf die Wand 5 des innersten Kastens 4 und werden dort mit Hilfe der Düsen 16 von diesem entfernt.

Im übrigen weisen die Abdeckkästen in bekannter Weise die Wände 19 auf, deren unteres Ende auf dem Maschinenbett gleitet und zwischen denen und den Wänden 5 je eine Wasserrinne 20 angeordnet ist, in die Kondenzwasser oder von den Abstreifleisten 18 nicht erfaßtes Wasser gelangt und auch dadurch das Maschinenbett frei von Wasser und Spänen gehalten wird.

## Patentansprüche

1. Abdeckung für das Maschinenbett von Werkzeugmaschinen, aus teleskopartig ineinander schiebbaren, im Querschnitt U-förmigen, sich auf dem Maschinenbett und aufeinander abstützenden Abdeckkästen, die seitlich geschlossen sind und eine nach oben offene Rinne bilden, aus der Wasser und Späne kopf- und/oder endseitig abführbar sind, dadurch gekennzeichnet, daß die nach oben gerichteten Seitenwände (6, 7) der Abdeckkästen (1-4) mit gegeneinander gerichteten Flanschen oder Leisten (8, 9) versehen sind, die jeweils die Flansche oder leisten des nächst kleineren Abdeckkastensüberdecken upd das auf dem Maschinenbett (M) abgestützte Ende der Abdeckkästen (1-4) mit einer Querrinne (20) versehen ist.

2. Abdeckung nach Anspruch 1, dadurch gekennzeichnet, daß dem obersten Abdeckkasten (4) eine in Längsrichtung dieses Kastens wirksame Blas- oder Spüleinrichtung (16) zugeordnet ist.

3. Abdeckung nach Anspruch 1, dadurch gekennzeichnet, daß der unterste Abdeckkasten (1) an seinem äußeren Ende mit einer Späneabfördervorrichtung (17) versehen ist.

## Claims

1 A cover for the machine bed of a machine tool, consisting of telescoping cover segments with a channel cross section, which are supported on the machine bed and on each other, are laterally closed and form an upwardly open trough from which water and chips produced by machining are able to be removed at the head and/or an end characterized in that the upwardly directed side walls (6 -and 7) of the cover segments (1 to 4) are provided with flanges or rails (8 and 9) running towards each other and which each cover the flanges or rails of the next smaller cover segment and the end of the cover segments (1 to 4), which is supported on the machine bed (M) is provided with a transverse trough (20).

2 The cover as claimed in claim 1 characterized in that the uppermost cover segment (4) is provided with a blowing or swilling means (16) acting in the length direction of this segment.

3 The cover as claimed in claim 1 characterized in that that the lowermost cover segment (1) is provided with a chip removing conveyor means (17) at its outer end.

## Revendications

1. Recouvrement pour bancs de machines-outils constitué par des caissons couvrants qui peuvent coulisser télescopiquement les uns dans les autres, ont une section en U, prennent appui sur le banc de la machine et les uns sur les autres, sont fermés sur le côté et forment une gouttière ouverte vers le haut par laquelle l'eau et les copeaux peuvent être évacués du côté de la tête et/ou de l'extrémité, caractérisé en ce que les parois latérales (6,7) orientées vers le haut des caissons couvrants (1-4) comportent des brides ou des rebords (8,9) tournés les uns contre les autres et recouvrant chacun les brides ou les rebords du caisson couvrant plus petit immédiatement sous-jacent et en ce que l'extrémité des caissons couvrants (1-4) qui prend appui sur le banc de machine (M) comporte une gouttière transversale (20).

2. Recouvrement selon la revendication 1, caractérisé en ce qu'au caisson couvrant supérieur (4) est associé un dispositif (16) de soufflage ou de rinçage agissant dans le sens de la longueur de ce caisson.

3. Recouvrement selon la revendication 1, caractérisé en ce que le caisson couvrant inférieur (1) comporte, à son extrémité la plus extérieure, un dispositif (17) d'évacuation des copeaux.

0 077 456

*Fig. 1*

*Fig. 2*

1